(19) **Europäisches Patentamt**

**European Patent Office**

**Office européen des brevets**

(11) Veröffentlichungsnummer: **0 309 890 B1**

(12) # EUROPÄISCHE PATENTSCHRIFT

(45) Veröffentlichungstag der Patentschrift: **15.01.92**

(21) Anmeldenummer: **88115492.6**

(22) Anmeldetag: **21.09.88**

(51) Int. Cl.⁵: **G01F 23/28**, G01N 29/02, G21C 17/02

(54) Anwendung des Verfahrens zur elektromagnetischen Ultraschall-Wandlung zur Überwachung von Füllhöhe und Blasenbildung in Flüssigkeit enthaltenden Umschliessungen.

(30) Priorität: **24.09.87 DE 3732219**

(43) Veröffentlichungstag der Anmeldung:
**05.04.89 Patentblatt 89/14**

(45) Bekanntmachung des Hinweises auf die
Patenterteilung:
**15.01.92 Patentblatt 92/03**

(84) Benannte Vertragsstaaten:
**CH DE ES FR GB LI SE**

(56) Entgegenhaltungen:
**EP-A- 0 053 068      DE-A- 2 947 362**
**DE-A- 2 947 463      GB-A- 2 076 536**
**GB-A- 2 097 923      GB-A- 2 167 185**
**US-A- 3 656 134**

**PATENT ABSTRACTS OF JAPAN, Band 10,**
**Nr. 305 (P-507)[2361], 17. Oktober 1986; &**
**JP-A-61 120 020**

(73) Patentinhaber: **SIEMENS AKTIENGESELL-SCHAFT**
**Wittelsbacherplatz 2**
**W-8000 München 2(DE)**

(72) Erfinder: **Kröning, Michael, Dr.**
**Eichenring 3**
**W-8551 Röttenbach(DE)**
Erfinder: **Löhr, Ernst, Dipl.-Ing.**
**Im Sand 4**
**W-8755 Alzenau 3(DE)**
Erfinder: **Walleser, Albin, Dipl.-Phys.**
**Balduinstrasse 55**
**W-6000 Frankfurt(DE)**
Erfinder: **Hübschen, Gerhard, Dr.**
**Lorisgartenstrasse 11**
**W-6630 Saarlouis 2(DE)**
Erfinder: **Repplinger, Wilhelm, Dipl.-Ing.FH**
**Dillingerstrasse 76b**
**W-6631 Dillingen 3(DE)**
Erfinder: **Salzburger, Hans-Jürgen, Dipl.-Phys.**
**Zu den Grenzsteinen 41**
**W-6680 Neunkirchen(DE)**

EP 0 309 890 B1

**ULTRASONICS SYMPOSIUM PROCEEDINGS, 1979, Seiten 376-379, IEEE, New York, US; L.C. LYNNWORTH: "Liquid level measurements using longitudinal, shear, extensional and torsional waves"**

**Soderdruck aus FhG-Bericht Nr. I-84, Seiten 23-32; H.-J. SALZBURGER et al.:"Ultraschallprüfung mit elektromagnetischen Wandlern"**

## Beschreibung

Die Erfindung bezieht sich auf ein Verfahren zur elektromagnetischen Ultraschall-Wandlung, bei dem im elektrisch leitfähigen Material eines Prüflings durch Überlagerung des quasi statischen Magnetfeldes und des elektromagnetischen Hochfrequenzfeldes eines Sendewandlers dynamisch-mechanische Kräfte auf die Materialteilchen ausgeübt und damit Ultraschallschwingungen erzeugt werden - Sendevorgang - bzw. umgekehrt durch in den Prüfling einfallende Ultraschallwellen und die dadurch hervorgerufenen Schwingungen der Materialteilchen elektrische Felder induziert werden, die induktiv das elektromagnetische Hochfrequenzfeld und das quasi statische Magnetfeld eines Empfangswandlers beeinflussen - Empfangsvorgang -, wobei beim Sendevorgang die Anregung der Ultraschallschwingungen und beim Empfangsvorgang die Induktion elektrischer Felder durch Lorentz-Kräfte und - bei ferromagnetischem Material des Prüflings - darüber hinaus durch magnetische Kräfte und durch Magnetostriktion erfolgen.

Ein solches Verfahren ist in dem Bericht Nr. 1 - 84 - aus dem Fraunhofer Institut für zerstörungsfreie Prüfverfahren "Ultraschallprüfung mit elektromagnetischen Wandlern" von G. Hübschen, W. Repplinger und H.-J. Salzburger, Seite 23 bis 32, näher beschrieben. Als vorteilhafte Anwendungen sind in diesem Bericht erwähnt unter Ziffer 4.1 die Prüfung dickwandiger Bauteile auf Innenfehler mit freien Wellen, unter Ziffer 4.2 die Prüfung der Oberfläche und der oberflächennahen Zone und unter Ziffer 4.3 die Prüfung mit geführten Wellen (Plattenwellen, Rohrwellen, Stabwellen).

In der DE-PS 26 55 804 sind verschiedene Ausführungsformen elektrodynamischer Ultraschallwellenwandler, die als Sendewandler und/oder Empfangswandler arbeiten können, beschrieben.

Gemäß den nicht gattungsgemäßen Verfahren und Einrichtungen nach der DE-PS 29 47 463 und der DE-OS 29 47 362 wurden bisher zur Überwachung des Füllstandes und der Blasenbildung bei ein flüssiges Medium enthaltenden Behältern und Rohrleitungen piezoelektrische Wandler als Ultraschall-Sender und -Empfänger eingesetzt, welche in Dickenrichtung schwingende Longitudinalwellen senden bzw. empfangen. Zur Übertragung dieser Dickenschwingung in die Behälter - bzw. Rohrwand - wird ein schallleitendes Medium benötigt, das sogenannte Koppelmittel. Dabei treten folgende Probleme auf:

a) Für heiße Teile und empfindliche Oberflächen, die nicht benetzt und verschmutzt werden dürfen, ist der Einsatz flüssiger Koppelmittel nicht ohne weiteres möglich. Weiter ist zu beachten, daß Einrichtungen, die über einen längeren Zeitraum eine Konstanz der Ankoppelung garantieren, konstruktiv aufwendig sind, insbesondere im Hinblick auf die Nachrüstung von bereits bestehenden Anlagen.

b) Im Falle der trockenen Ankoppelung wird zwischen dem Sensor und der Behälter- oder Rohrwand eine Folie, z.B. aus Silber, eingelegt. Über Federkraft wird dann der Sensor an den Behälter oder die Rohrleitung angepreßt. Diese Methode stellt hohe Anforderungen an die Bearbeitung der Behälterwand, denn im Auflagebereich des Sensors muß die Behälterwand plan und hinreichend glatt sein, um eine gute Ankoppelung zu ermöglichen. Weiterhin ist zu berücksichtigen, daß sich die Eigenschaften der Koppelfolie im Laufe der Zeit nicht verändern dürfen. Diese Methode erfordert ebenfalls eine Einrichtung, über die der Sensor an die Behälterwand angepreßt werden kann, was bei der Nachrüstung vorhandener Anlagen zu nicht geringen Schwierigkeiten führen kann.

Der Erfindung liegt die Aufgabe zugrunde, ein Verfahren anzugeben, mit dem eine Überwachung der Füllhöhe und der Blasenbildung in Flüssigkeit, insbesondere Wasser, führenden Umschließungen in Form von Behältern oder Rohrleitungen ermöglicht ist, ohne daß zur Ankoppelung der Ultraschall-Prüfköpfe ein flüssiges Koppelmittel oder die Zwischenlage besonderer Koppelfolien erforderlich wären.

Ausgehend von einem Verfahren zur elektromagnetischen Ultraschall-Wandlung gemäß Oberbegriff des Patentanspruchs 1 wird die gestellte Aufgabe erfindungsgemäß gelöst durch die kennzeichneden Verfahrensschritte der Ansprüche 1 und 6.

Vorteilhafte Weiterbildungen dieser Verfahren sind in den Patentansprüchen 2 bis 5, 7 und 8 angegeben.

Die mit der Erfindung erzielbaren Vorteile sind vor allem darin zu sehen, daß durch den Einsatz der nach dem Prinzip der elektromagnetischen Ultraschallwandlung arbeitenden Sendewandler und Empfangswandler, die auch abgekürzt als EMUS-Wandler bezeichnet werden, die geschilderten Ankoppelungsprobleme entfallen. Das Verfahren nach der Erfindung erlaubt das Senden und Empfangen von Ultraschall in elektrisch leitfähigen Materialien ohne Koppelmittel und ohne physikalischen Kontakt mit der Behälterwand bzw. Rohrwand.

Im folgenden werden anhand der Zeichnung mehrere Ausführungsbeispiele des Verfahrens nach der Erfindung sowie die in den Ansprüchen angegebenen Merkmale, weitere Vorteile und die Wirkungsweise näher erläutert.

In der Zeichnung zeigt in schematischer Darstellung:

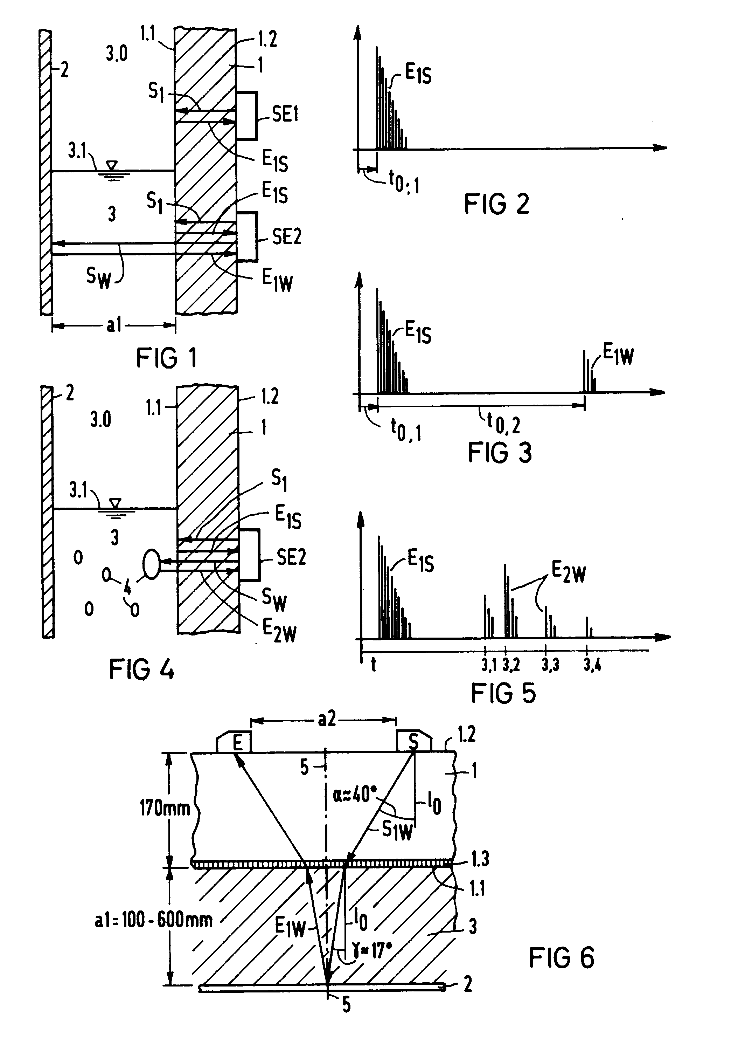

FIG 1     im Ausschnitt die Wand eines Reaktordruckbehälters mit Wasserstrecke und als Reflektor wirkendem Einbauteil, wobei außen auf die Behälterwand in zwei verschiedenen Höhenpositionen sogenannte EMUS-Wandler, ausgebildet als kombinierte Sende- und Empfangswandler, aufgesetzt und angekoppelt sind;

FIG 2     in einem Diagramm "Echo-Höhe über der Zeit", gemäß welchem das Ultraschall-Echosignal im oberen Sende-Empfangs-Wandler (abgekürzt: S-E-Wandler) empfangen wird, wenn im detektierten Raum kein Wasser vorhanden ist;

FIG 3     in einem Diagramm entsprechend FIG 2 das zu FIG 2 analoge Ankoppelungs-Signal, welches an der inneren Grenzfläche der Behälterwand reflektiert wird, und zusätzlich ein zeitlich verzögertes Echosignal, welches die Wasserstrecke zweimal durchlaufen hat und als Indikator "Wasser vorhanden" dient;

FIG 4     eine der FIG 1 entsprechende, jedoch abgewandelte Anordnung, bei der in der Wasserstrecke Blasen enthalten sind (Dampf- und/oder Gasblasen) und außen auf die Behälterwand nur ein S-E-Wandler aufgesetzt und an die Wand angekoppelt ist, wobei sein Echosignal aufgrund der vorhandenen Blasen in der Wasserstrecke geändert ist;

FIG 5     in einem Diagramm mit Koordinaten-Achsen entsprechend FIG 2 und FIG 3 die von dem S-E-Wandler nach FIG 4 empfangenen Echosignale, und zwar das in der Amplitude größere Ankoppelungssignal und zeitverzögert mehrere an den Blasen "gestreute" und amplitudenreduzierte Echosignale;

FIG 6     die grundsätzliche Anordnung nach FIG 1 und FIG 4 dahingehend abgewandelt, daß auch eine Innenplattierung der Behälterwand dargestellt ist und anstelle des kombinierten S-E-Wandlers nun voneinander getrennte Sendewandler und Empfangswandler verwendet sind, welche schräg in die Behälterwand vertikal polarisierte freie Transversalwellen, sogenannte SV-Wellen, einstrahlen (Sendewandler) bzw. diese schräg aus der Behälterwand kommenden Ultraschallwellen empfangen (Empfangswandler). Die Darstellung in FIG 6 ist in Abweichung von den natürlichen Verhältnissen in die Horizontale gedreht;

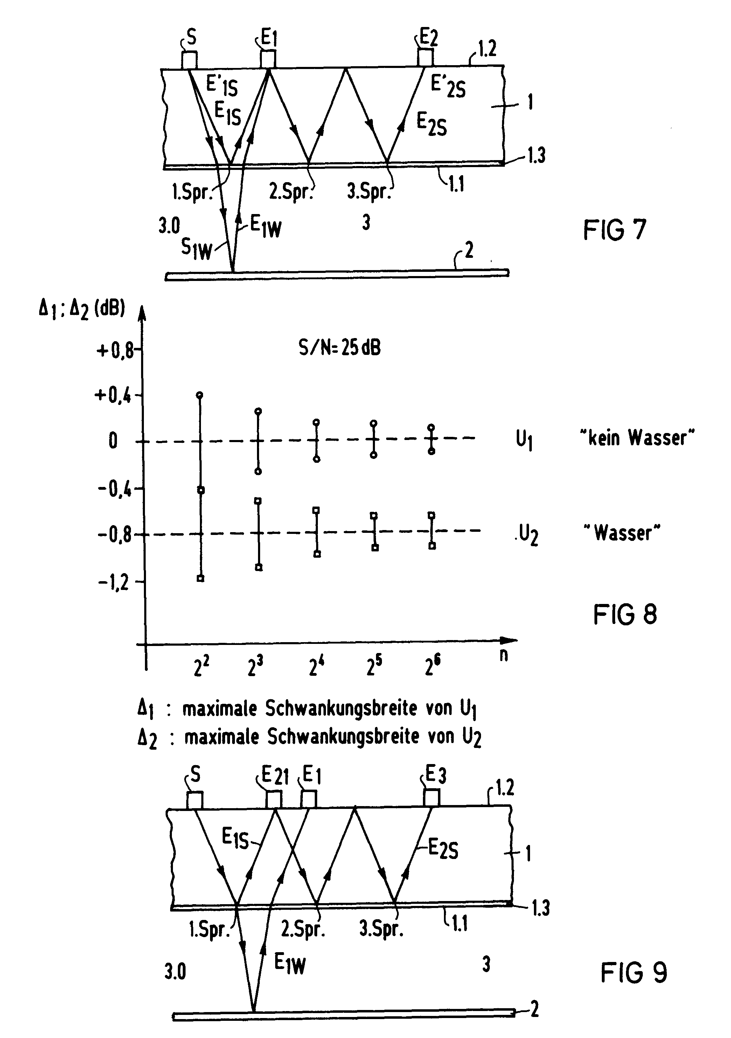

FIG 7     eine Modifikation des Verfahrens gemäß FIG 6, wobei die Mehrfach-Totalreflexion an den beiden Behälterwand-Grenzflächen bei Nichtvorhandensein von Wasser und die Mehrfach-Reflexion an diesen Grenzflächen bei Vorhandensein von Wasser ausgenutzt und zum Empfang der mehrfach reflektierten Echosignale auch mehrere Empfangswandler verwendet werden;

FIG 8     in einem Diagramm die maximalen Schwankungsbreiten von Amplitudendifferenzen der Echosignale bei den Zuständen "Wasser vorhanden" und "kein Wasser vorhanden" in dB (Ordinatenachse) abhängig von der Anzahl n der gemittelten Meßwerte, aufgetragen auf der Abszissenachse als aufsteigende Potenzen der Basis 2;

FIG 9     die prinzipielle Anordnung nach FIG 7, dadurch abgewandelt, daß für das durch die Wasserstrecke laufende Echosignal und das an der inneren Grenzfläche der Behälterwand nach dem ersten Sprung reflektierte Echosignal je ein gesonderter Empfangswandler verwendet wird.

Auf sehr einfache Weise ist das Verfahren nach der Erfindung beim ersten Ausführungsbeispiel nach den FIG 1 bis 5 verwirklicht. Zu den physikalischen Grundlagen des Verfahrens siehe den schon erwähnten Fachaufsatz "Ultraschallprüfung mit elektromagnetischen Wandlern" von H.-J. Salzburger et al, Bericht Nr. 1-84 aus dem Fraunhofer-Institut für zerstörungsfreie Prüfverfahren, Saarbrücken. Die in FIG 1 und FIG 4 dargestellten EMUS-Wandler (EMUS = elektromagnetische Ultraschall-Wandlung) arbeiten zugleich als Sende- und als Empfangs-Wandler und sind deshalb mit SE1 (oberer Wandler in FIG 1) und SE2 (unterer Wandler in FIG 1 und Wandler in FIG 4) bezeichnet. Im folgenden wird für sie der Name EMUS-Sensoren verwendet. In FIG 1 sind sie außen auf die Behälterwand 1 eines Kernreaktor-Druckbehälters, insbesondere eines Siedewasserreaktors, aufgesetzt und angekoppelt. Diese Behälterwand 1 ist nur im interessierenden Ausschnitt dargestellt, ebenso wie die mit Abstand $a_1$ zur Innenseite 1.1 der Behälterwand 1 angeordnete, als Reflektor dienende Einbauwand 2, die z.B. zu einem Kernbehälter gehören kann, welche die (nicht dargestellte) Brennelement-Anordnung umgibt.

Der Zwischenraum 3.0 zwischen Behälterwand-Innenseite 1.1 und Einbauwand 2 ist bis zur Spiegelhöhe 3.1 mit Reaktorkühlwasser ausgefüllt, das im folgenden als Wasserstrecke 3 bezeichnet wird.

Die in FIG 1 und FIG 4 nur schematisch dargestellten EMUS-Sensoren SE1, SE2 können grundsätzlich so aufgebaut sein, wie in Bild 4 a,b,c der DE-PS 26 55 804 dargestellt und dort in Spalte 5, Zeilen 66 bis Spalte 6, Zeile 21 beschrieben. Für die Ankoppelung der EMUS-Sensoren SE1, SE2 ist weder die Benetzung der Ankoppelungsflächen erforderlich, noch müssen besondere Metallfolien zwischengelegt werden.

Betrachtet man von den gegen die Außenseite 1.2 der Behälterwand 1 durch nicht näher dargestellte Andruckvorrichtungen angedrückten und an die Behälterwand 1 angekoppelten EMUS-Sensoren den in FIG 1 unteren SE2, so stellt man zwei Arten von Echosignalen fest: Echosignale erster Art $E_{1W}$, welche an der Einbauwand 2 reflektiert werden, die Wasserstrecke 3 und anschließend die Behälterwand 1 durchlaufen und so zum zugehörigen EMUS-Sensor SE2 zurückkehren. Zu ihnen gehört der Sendestrahl $S_W$, welcher vom EMUS-Sensor SE2 ausgesandt wird und die Behälterwand 1 sowie die Wasserstrecke 3 durchdringt, bevor er an der Einbauwand 2 zurückgeworfen und dann als Echosignal erster Art seinen Weg nimmt. Mit Echosignal zweiter Art $E_{1S}$ werden die Echosignale bezeichnet, die als Sendestrahl S1 in die Behälterwand 1 eindringen und von deren Innenseite bzw. innerer Grenzfläche 1.1 als Signal $E_{1S}$ direkt reflektiert werden, ohne daß sie in die Wasserstrecke 3 eindringen. Diese Echosignale erster Art $E_{1W}$ sind auf dem Bildschirm in Bezug auf den Zeitpunkt t = 0 um die Zeitspanne $t_{0,2}$ verzögert und sie sind auch in ihrer Amplitude reduziert, wie es ein Vergleich mit den Echosignalen zweiter Art $E_{1S}$ in FIG 3 ergibt, deren Zeitverzug mit $t_{0,1}$ bezeichnet ist und deren Amplitudenspitzen höher als diejenigen der Echosignale erster Art sind. Das liegt daran, daß letztere die Wasserstrecke 3 zweimal durchlaufen müssen. Die Echosignale erster Art $E_{1W}$ zeigen also, daß in dem vom EMUS-Sensor SE2 überwachten Bereich Reaktorkühlwasser bzw. allgemein Flüssigkeit vorhanden ist. Der in FIG 1 darüber befindliche EMUS-Sensor SE1 findet dagegen keine Wasserstrecke vor, sondern lediglich einen Luft- bzw. Gasraum 3.0; seine Sendestrahlen S1 werden deshalb direkt an der inneren Grenzfläche 1.1 reflektiert und gelangen als Echosignale zweiter Art $E_{1S}$ zurück zum EMUS-Sensor SE1, vergleiche dazu auch FIG 2. Diese Signale $E_{1S}$ dienen als Ankoppelungskontrolle für die EMUS-Sensoren SE1 und SE2.

Die Echosignale erster Art $E_{1W}$ dienen also als Indikator für den Zustand "Wasser vorhanden", und die Echosignale zweiter Art $E_{1S}$ dienen als Ankoppelungskontrolle. FIG 4 und 5 zeigen die dritte grundsätzliche Möglichkeit, nämlich den Zustand "blasenhaltiges Wasser vorhanden". In diesem Falle enthält die Wasserstrecke 3 Gas- und/oder Dampfblasen 4. Wenn der Volumenanteil dieser Blasen 4 nicht zu hoch ist, dann wird ein Teil des in die Wasserstrecke 3 übertretenden Sendestrahls $S_W$ an den Grenzflächen zwischen Wasser und Blasen reflektiert und gelangt als Echosignal dritter Art $E_{2W}$ zurück zum EMUS-Sensor SE2, wobei dieses Echosignal dritter Art ebenfalls in der Amplitude reduziert ist und "gestreut" ist, wie es die einzelnen Laufzeiten $t_{0,3,1}$, $t_{0,3,2}$ usw. in FIG 5 zeigen. Bisherige Erfahrungen zeigen, daß mit einem EMUS-Sensor noch auswertbare Echosignale dritter Art $E_{2W}$ empfangen werden können, wenn der Blasenvolumen-Anteil nicht allzu hoch liegt.

Beim zweiten Ausführungsbeispiel nach FIG 6 sind abweichend von demjenigen nach FIG 1 bis FIG 5 je ein gesonderter Sendewandler S und Empfangswandler E als EMUS-Sonden verwendet, welche auf der Außenseite 1.2 der Behälterwand 1 mit Abstand $a_2$ zueinander so angeordnet sind, daß der Empfangswandler E den schräg zum Lot $1_0$ in die Behälterwand 1 gesandten Sendestrahl $S_{1W}$ nach dessen Brechung an der Grenzfläche 1.1 und Reflexion an der Einbauwand 2 als Echosignal erster Art $E_{1W}$ wieder empfängt. Der Einfallswinkel des Sendestrahls $S_{1W}$ zum Lot $1_0$ beträgt im Beispiel etwa $40°$. Die Behälterwand 1 ist an ihrer Innenseite noch mit einer Plattierungsschicht 1.1 versehen, die somit an ihrer Oberfläche die Grenzfläche 1.2 bildet. An dieser Grenzfläche 1.2 wird der Sendestrahl $S_{1W}$ unter einem Brechungswinkel $\gamma \approx 17°$ vom Lot $1_0$ weggebrochen und dann an der Einbauwand 2 reflektiert. Das Echosignal zweiter Art $E_{1W}$ wird dann spiegelbildlich bezüglich der Symmetrieachse 5,5 zum Sendestrahl $S_{1W}$ reflektiert an der Einbauwand 2, an der Grenzfläche 1.2 vom Lot weggebrochen und gelangt dann zum Empfangswandler E. Im Beispiel betrug die Stärke der Behälterwand 1 170 mm, und die Dicke $a_1$ der Wasserstrecke 3 lag im Bereich zwischen 100 und 600 mm. Beim Sendestrahl $S_{1W}$ des Sendewandlers S handelt es sich bevorzugt um eine vertikal polarisierte freie Transversalwelle, eine sogenannte SV-Welle. Diese wird bei vorhandener Wasserstrecke 3 an der Grenzfläche 1.2 Stahl/Wasser in eine Longitudinalwelle umgewandelt, die durch die Wasserstrecke 3 bis zum Einbauteil 2 übertragen wird. Nach Reflexion an der Einbauwand 2 wird die Longitudinalwelle $E_{1W}$ an der Grenzfläche 1.2 wieder in eine Transversalwelle umgewandelt und dann vom Empfangswandler E detektiert. Dies gilt für den Zustand "Wasser vorhanden". Ist kein Wasser vorhanden, so entfällt das beschriebene Echosignal erster Art; es treten dann nur Echosignale zweiter Art auf, welche also an der Grenzfläche 1.1 reflektiert bzw. totalreflektiert werden und durch die Empfangswandler E bei ausreichender Flächenüberdeckung derselben oder durch gesonderte Empfangswandler (nicht dargestellt) empfangen werden können. Im Falle des Zustandes "blasenhaltiges Wasser vorhanden" würde aus dem Echosignal erster Art ein solches dritter Art, welches im Vergleich zum jemjenigen erster Art in seiner Amplitude geschwächt und im Bezug auf seine Laufzeiten "gestreut" wäre, wie dies anhand von FIG 4 und FIG 5 bereits erläutert wurde.

Bei Blasenbildung mit einem höheren Volumenanteil kann das am Einbauteil 2 des Behälters reflektierte und durch die Wasserstrecke 3 übertragene Ultraschall-Signal, so wurde gefunden, nicht mehr ausgewertet werden. Damit auch in diesem Falle eine reproduzierbare Füllstands- und Blasendetektierung ermöglicht ist, ist gemäß dem dritten Ausführungsbeispiel nach FIG 7 die Anordnung so getroffen, daß als Echosignal zweiter Art, entsprechend dem Zustand "kein Wasser vorhanden", ein an der inneren und äußeren

5

Grenzfläche 1.1, 1.2 der Behälterwand 1 einfach und mehrfach totalreflektiertes Sendesignal $E_{1S}$ verwendet wird, d.h. ein Totalreflexionssignal nach dem ersten Sprung, dem zweiten Sprung, dem dritten Sprung usw. Die vom Sendewandler S als Sendestrahl gesendeten freien Transversalwellen bzw. SV-Wellen $E_{1S}$ werden also bei Nichtvorhandensein von Wasser im Raum 3.0, wie man aus FIG 7 erkennt, an der Grenzfläche 1.1 und der gegenüberliegenden äußeren Grenzfläche 1.2 mehrfach totalreflektiert. Im Beispiel werden sie von zwei Empfangswandler $E_1$ nach dem ersten Sprung und $E_2$ nach dem dritten Sprung empfangen.

Analog zum Beispiel nach FIG 6 ist auch das Echosignal erster Art $E_{1W}$ vorhanden, zu dem der Sendestrahl $S_{1W}$ gehört. Dieses Echosignal erster Art tritt auf, wenn blasenfreies Wasser im Zwischenraum 3.0 vorhanden ist. Für die weiteren Überlegungen sei unterstellt, daß der Blasenvolumen-Anteil relativ hoch ist, so daß also in diesem Falle das Echosignal erster Art $E_{1W}$ verschwindet und auch ein Echosignal dritter Art, wie anhand des ersten und zweiten Ausführungsbeispiels erläutert, nicht auftritt. Für diesen Fall werden weitere Echosignale vierter Art verwendet, die mit $E_{1S'}$ und $E_{2S'}$ bezeichnet werden.

Sie entstehen aus den gleichen Sendesignalen wie die Echosignale zweiter Art $E_{1S}$ und $E_{2S}$, allerdings handelt es sich nicht um totalreflektierte Echosignale, sondern um solche, die an der inneren und äußeren Behälterwand 1.1 bzw. 1.2 mehrfach reflektiert werden, d.h. Reflexionssignale nach dem ersten Sprung, dem zweiten Sprung, dem dritten Sprung usw. repräsentieren, die jedoch mit jedem Sprung wegen der dabei erfolgenden Energieabstrahlung in die angrenzende Wasserstrecke 3 mehr Energie verlieren als die totalreflektierten Echosignale zweiter Art. Diese Echosignale vierter Art $E_{1S'}$, $E_{2S'}$, welche auch dann auftreten, wenn bei Vorhandensein von Gas-/Dampfblasen ein Echosignal dritter Art verschwindet, werden in Beziehung gesetzt miteinander und/oder zu den Echosignalen zweiter Art $E_{1S}$ und $E_{2S}$, so daß die Amplitudendifferenzen zwischen den Echosignalen zweiter Art und vierter Art - bei Nichtvorhandensein der Echosignale erster und dritter Art - ein Indikator für vorhandene Dampf- bzw. Gasblasen (dazu gehören naturgemäß auch Luftblasen) in der Wasserstrecke sind. Es ergeben sich somit Amplitudenunterschiede in den Empfangssignalen der Empfangswandler $E_1$ und $E_2$, die empfangen werden, einerseits, wenn "Wasser vorhanden" ist und andererseits, wenn "kein Wasser vorhanden" ist. Im letztgenannten Fall sind die Amplituden größer, im erstgenannten Fall kleiner.

Wie bereits erwähnt, tritt bei größerem Blasengehalt ein Echosignal dritter Art nicht mehr auf bzw. ist nicht mehr auswertbar. In diesem Falle hat es sich als besonders vorteilhaft erwiesen, die Amplitudendifferenzen zwischen dem ersten und dem dritten Sprung zur Füllstandsmessung auszunutzen, wie in FIG 7 gezeigt. Es werden also jeweils Amplitudendifferenzen $U_1 = E_{1S} - E_{2S}$ gebildet zwischen den Echosignalen zweiter Art nach dem ersten Sprung $E_{1S}$ und denjenigen nach dem dritten Sprung $E_{2S}$. Weiterhin werden Amplitudendifferenzen $U_2$ gebildet zwischen den Echosignalen vierter Art nach dem ersten Sprung $E_{1S'}$ und denjenigen nach dem dritten Sprung $E_{2S'}$ und es wird eine Pegelschwelle definiert. Liegt die Amplitudendifferenz $E_{1S} - E_{2S}$ oberhalb dieser Schwelle, so dient sie als Indikator für den Zustand "kein Wasser vorhanden". Liegt eine Amplitudendifferenz unterhalb dieser Schwelle, so handelt es sich um die Differenz $E_{1S'} - E_{2S'}$ und diese Amplitudendifferenz dient als Indikator für den Zustand "Wasser vorhanden" oder "blasenhaltiges Wasser vorhanden". Bei einer Auswertung des durch das Wasser übertragenen Signals $E_{1W}$ und der Amplitudendifferenzen der über den ersten und dritten Sprung empfangenen Signale $E_{1S}$ und $E_{2S}$ bzw. $E_{1S'}$ und $E_{2S'}$ sind die folgenden in der Tabelle dargestellten Zustände möglich, die in einer Empfangslogik ausgewertet werden können:

Tabelle

| | |
|---|---|
| $E_{1W}$ vorhanden<br>$E_{1S} - E_{2S}$ unterhalb Schwelle | Wasser vorhanden |
| $E_{1W}$ nicht vorhanden<br>$E_{1S} - E_{2S}$ unterhalb Schwelle | Wasser vorhanden<br>(jedoch mit<br>Blasengehalt) |
| $E_{1W}$ nicht vorhanden<br>$E_{1S} - E_{2S}$ oberhalb Schwelle | kein Wasser vorhanden |
| Erkennungslogik für die drei möglichen Betriebszustände | |

In FIG 8 sind die beiden durch Amplitudendifferenzbildung der Echosignale nach dem ersten und nach dem dritten Sprung gewonnenen Signalpegel $U_1$ ("kein Wasser") und $U_2$ ("Wasser") als gestrichelte Linien eingetragen. Ihr Abstand beträgt als Beispiel erschwerter Bedingungen nur 0,8 dB. Damit dieser Abstand auf dem Bildschirm eines Kathodenstrahl-Oszillographen oder bei anderen geeigneten Meßinstrumenten klar erkennbar ist, empfiehlt es sich, daß eine Vielzahl von Einzelamplitudenwerten gemittelt wird und auf diese Weise die maximalen Schwankungsbreiten $\Delta_1$, $\Delta_2$ der Mittelwerte der Empfangsamplituden $U_1$ für den Zustand "kein Wasser" und $U_2$ für den Zustand "Wasser vorhanden" bei gegebenem Signal-Rausch-Abstand S/N auf minimale Werte reduziert werden, so daß die auszuwertende Amplitudendifferenz $U_1 - U_2$ ein Mehrfacheres, z.B. etwa das dreifache der maximalen Schwankungsbreiten $\Delta_1$, $\Delta_2$ der mittleren Empfangsamplituden $U_1$ bzw. $U_2$ beträgt. Im dargestellten Diagramm nach FIG 8 erkennt man, daß bei Mittelung von $64 = 2^6$ Einzelamplitudenwerten je Meßwert und einer Gesamtanzahl von 128 Meßwerten die maximale Schwankungsbreite ca. ein Prozent des Mittelwertes der Meßwerte beträgt. Mit n ist die Anzahl der Mittelungen bezeichnet.

Bei Wasserstrecken 3 zwischen 100 und 300 mm ist es zwar möglich, mit dem Empfänger $E_1$ (siehe FIG 7) außer dem Signal des Einbauteils $E_{1W}$ das über den ersten Sprung einer Behälterinnenseite 1.1 reflektierte Signal mit Signal-Rausch-Abständen von 25 bis 30 dB unter Normalbedingungen zu empfangen. Im Betrieb können allerdings Dynamikverluste auftreten. Um in diesem Falle eine sichere Auswertung der Amplitudendifferenz zwischen den Zuständen "Wasser vorhanden" und "kein Wasser vorhanden" zu erhalten, wird gemäß FIG 9 zum Empfang des Signales $E_{1S}$ eine zusätzliche Empfangssonde $E_{21}$ vorgesehen. Für dieses Ausführungsbeispiel nach FIG 9 gilt also, daß insbesondere bei großen Wasserstrecken die Echosignale erster Art $E_{1W}$ und die Echosignale zweiter Art nach dem ersten Sprung $E_{1S}$ von je einem Empfangswandler $E_1$ bzw. $E_{21}$ empfangen werden. Zum Empfang der Echosignale zweiter Art nach dem dritten Sprung $E_{2S}$ wird dann ein weiterer Empfangswandler $E_3$ vorgesehen.

Durch die beiden prinzipiellen Ausführungsbeispiele nach FIG 7 und FIG 9 in Verbindung mit der Signalmittelung nach FIG 8 ist es möglich, in den gängigen Bereichen des Abstands der Behälterwand-Innenseite 1.1 zur Einbauwand 2 zuverlässige und reproduzierbare Echosignale zweiter und vierter Art zu erhalten, die eine Unterscheidung der drei Zustände "Wasser vorhanden" oder "kein Wasser vorhanden" oder "blasenhaltiges Wasser vorhanden" zulassen.

Das beschriebene Verfahren läßt sich nicht nur bei Reaktordruckbehältern und hier insbesondere bei solchen von Siedewasserreaktoren einsetzen, sondern auch bei wasser- bzw. flüssigkeitführenden Rohrleitungen, wobei dann die den angekoppelten EMUS-Sonden gegenüberliegenden Wandpartien der Rohrleitung die Funktion eines Reflektors wahrnehmen.

**Patentansprüche**

**1.** Verfahren zur elektromagnetischen Ultraschall-Wandlung, bei dem im elektrisch leitfähigen Material eines Prüflings durch Überlagerung des quasi statischen Magnetfeldes ($B_0$) und des elektromagnetischen Hochfrequenzfeldes (B) eines Sendewandlers dynamisch-mechanische Kräfte auf die Materialteilchen ausgeübt und damit Ultraschallschwingungen erzeugt werden - Sendevorgang - bzw. umgekehrt durch in den Prüfling einfallende Ultraschallwellen und die dadurch hervorgerufenen Schwingungen der Materialteilchen elektrische Felder induziert werden, die induktiv das elektromagnetische Hochfrequenzfeld (B) und das quasi statische Magnetfeld ($B_0$) eines Empfangswandlers beeinflussen - Empfangsvorgang -,

wobei beim Sendevorgang die Anregung der Ultraschallschwingungen und beim Empfangsvorgang die Induktion elektrischer Felder durch Lorentz-Kräfte ($F_L$) und - bei ferromagnetischem Material des Prüflings - darüber hinaus durch magnetische Kräfte ($F_M$) und durch Magnetostriktion (Kräfte $F_{MS}$) erfolgen, **dadurch gekennzeichnet,** daß zur Überwachung der Füllhöhe und der Blasenbildung in Flüssigkeit enthaltenden oder führenden Umschließungen in Form von Behältern und Rohrleitungen, wenigstens ein Sendewandler (SE1,SE2, S) an die Wand (1) der Umschließung angekoppelt wird und in dieser Wand Ultraschallschwingungen erzeugt werden, welche abhängig davon, ob in dem von der Wand umgebenen Innenraum (3.0) der Umschließung

- Flüssigkeit (3) - oder
- von Dampf-/Gasblasen (4) durchsetzte Flüssigkeit (3) - oder
- nur ein dampf- bzw. gasförmiges Fluid -

sich befinden, als Echosignale erster, zweiter oder dritter Art in wenigstens einem an die Wand (1) angekoppelten Empfangswandler (SE1,SE2,E,$E_1$,$E_2$,$E_{21}$,$E_3$) nach Amplitude und/oder Phase unterschiedliche Ultraschall-Echosignale induzieren, die entweder von der inneren Grenzfläche (1.1) der Wand (1) reflektiert werden - Echosignale zweiter Art - oder aber - nach Übertritt in die Flüssigkeit (3) und Zurücklegen eines Weges in dieser - auf einen Reflektor (2) auftreffen, von dem sie durch die Flüssigkeit (3) und die Wand (1) hindurch zum Empfangswandler (SE1, SE2,E,$E_1$,$E_2$,$E_{21}$,$E_3$) zurückgeworfen werden - Echosignale erster oder dritter Art -, und daß mit dem Sendewandler (S) vertikal polarisierte freie Transversalwellen, sogenannte SV-Wellen,

unter einem Winkel ($\alpha$) zum Einfallslot (10) eingestrahlt werden, so daß dieser schräge Sendestrahl ($S_{1W}$) an der Grenzfläche (1.1) Behälterwand - Wasserstrecke zum Lot hin gebrochen und in eine Longitudinalwelle umgewandelt wird, welche nach Reflexion am Einbauteil (2) und beim erneuten Durchlaufen der Grenzschicht (1.1) Wasserstrecke - Behälterwand in eine SV-Welle zurückverwandelt und vom Lot weg gebrochen sowie als Echosignal erster oder dritter Art ($E_{1W}$ bzw. $E_{2W}$) von einem Empfangswandler (E) empfangen wird und sich hinsichtlich Amplitude und Phase vom Echosignal zweiter Art ($E_{1S}$) unterscheidet, welches bei Nichtvorhandensein von Wasser an der inneren Grenzfläche (1.1) der Behälterwand (1) total reflektiert wird und von dort seinen Empfangswandler (E) ungebrochen erreicht.

2. Verfahren nach Anspruch 1,
vorzugsweise zur Füllstands- und Blasendetektierung bei höheren Blasenvolumen-Anteilen,
**dadurch gekennzeichnet,**
daß als Echosignal zweiter Art, entsprechend dem Zustand "kein Wasser vorhanden" ein an der inneren und äußeren Grenzfläche (1.1,1.2) der Behälterwand (1) einfach und mehrfach total reflektiertes Sendesignal ($E_{1S}$, $E_{2S}$, ... ), d.h. ein Total-Reflektionssignal nach dem ersten Sprung, dem zweiten Sprung, dem dritten Sprung usw., verwendet wird,
daß zusätzlich zu den Echosignalen erster Art, entsprechend dem Zustand "Wasser vorhanden", welche am Einbauteil mindestens einmal reflektierte und demnach zweimal die Wasserstrecke durchlaufende Sendesignale ($E_{1W}$) umfassen,
weitere Echosignale vierter Art verwendet werden, welche aus Sendesignalen entstehen, die an der inneren und äußeren Behälterwand einfach und mehrfach reflektiert werden, d.h. Reflexionssignale nach dem ersten Sprung, dem zweiten Sprung, dem dritten Sprung usw. repräsentieren, die jedoch mit jedem Sprung wegen der dabei erfolgenden Energieabstrahlung in die angrenzende Wasserstrecke mehr Energie verlieren als die total reflektierten Echosignale zweiter Art,
und daß diese Echosignale vierter Art ($E'_{1S}$,$E'_{2S}$) , welche auch dann auftreten, wenn bei Vorhandensein von Gas-/Dampfblasen ein Echosignal dritter Art verschwindet, in Beziehung gesetzt werden miteinander und/oder zu den Echosignalen zweiter Art, so daß die Amplitudendifferenzen zwischen den Echosignalen zweiter und vierter Art - bei Nichtvorhandensein der Echosignale erster und dritter Art - ein Indikator für vorhandene Dampf-/Gasblasen in der Wasserstrecke sind.

3. Verfahren nach Anspruch 2,
**dadurch gekennzeichnet,**
daß jeweils Amplitudendifferenzen ($U_1$ = $E_{1S}$ - $E_{2S}$) gebildet werden zwischen den Echosignalen zweiter Art nach dem ersten Sprung und denjenigen nach dem dritten Sprung sowie Amplitudendifferenzen ($U_2$ = $E_{1S'}$ - $E_{2S'}$) gebildet werden zwischen den Echosignalen vierter Art nach dem ersten Sprung und denjenigen nach dem dritten Sprung
und daß eine Pegelschwelle definiert wird mit Amplitudendifferenzen ($E_{1S}$ - $E_{2S}$) oberhalb dieser Schwelle als Indikator für den Zustand "kein Wasser vorhanden" und mit Amplitudendifferenzen ($E_{1S'}$ - $E_{2S'}$) unterhalb dieser Schwelle als Indikator für den Zustand "Wasser vorhanden" oder "blasenhaltiges Wasser vorhanden".

4. Verfahren nach Anspruch 2 oder 3,
**dadurch gekennzeichnet,**
daß zur Auswertung kleiner Amplitudendifferenzen eine Vielzahl von Einzelamplitudenwerten gemittelt werden und auf diese Weise die maximalen Schwankungsbreiten ($\Delta_1$, $\Delta_2$) der Mittelwerte dem Empfangsamplituden ($U_1$) für den Zustand "kein Wasser vorhanden" und ($U_2$) für den Zustand "Wasser vorhanden" bei gegebenem Signal-Rausch-Abstand (S/N) auf minimale Werte reduziert werden, so daß die auszuwertende Amplitudendifferenz ($U_1$ - $U_2$) ein Mehrfaches der maximalen Schwankungsbreiten ($\Delta_1$, $\Delta_2$) der mittleren Empfangsamplituden ($U_1$, $U_2$) beträgt.

5. Verfahren nach einem der Ansprüche 2 bis 4,
**dadurch gekennzeichnet,**
daß insbesondere bei großen Wasserstrecken die Echosignale erster Art ($E_{1W}$) und die Echosignale zweiter Art nach dem ersten Sprung ($E_{1S}$) von je einem Empfangswandler ($E_1$) bzw. ($E_{21}$) empfangen werden und daß zum Empfang der Echosignale zweiter Art nach dem dritten Sprung ($E_{2S}$) ein weiterer Empfangswandler ($E_3$) vorgesehen wird.

EP 0 309 890 B1

**6.** Verfahren zur elektromagnetischen Ultraschallwandlung nach dem Oberbegriff des Anspruchs 1,
**dadurch gekennzeichnet,**
daß zur Überwachung der Füllhöhe und der Blasenbildung des Kühlwassers bei Reaktordruckbehältern von Kernkraftwerken wenigstens ein Sendewandler (SE1,SE2,S) von außen an die Behälterwand des zylindrischen Reaktordruckbehälters wenigstens an einer Stelle kurz unterhalb des normalen Füllstandniveaus angekoppelt wird
und daß der durch die Behälterwand (1) und eine angrenzende Wasserstrecke (3) des Reaktorwassers laufende sowie auf einen an der Innenseite der Wasserstrecke als Reflektor angeordneten Einbauteil (2) auftreffende Ultraschall-Sendestrahl ($S_W$,$S_{1W}$) als Echosignal erster Art ($E_{1W}$) zur Außenseite (1.2) der Behälterwand (1) zurückläuft und dort von einem Empfangswandler (SE1,SE2,E) als Signal "Wasser vorhanden" empfangen wird, wogegen bei Nichtvorhandensein von Wasser der Sendestrahl (S1) an der Innenseite (1.1) der Behälterwand (1) reflektiert wird und dort als Echosignal zweiter Art $E_{1S}$) am genannten Empfangswandler oder einem zusätzlichen Empfangswandler als Signal "Wasser nicht vorhanden" empfangen wird, welch letzteres Signal sich vom Echosignal erster Art durch kürzere Laufzeit und größere Amplitude unterscheidet,
und daß im Falle des Vorhandenseins von Dampf oder Gasblasen (4) in der überwachten Wasserstrecke (3) bis zu einer Grenze des Blasenvolumen-Anteiles das Echosignal erster Art "Wasser vorhanden" zu einem Echosignal dritter Art ($E_{2W}$) "blasenhaltiges Wasser vorhanden" umgewandelt wird, welches in mehrere Echoteilsignale gestreut und in der Amplitude reduziert ist.

**7.** Verfahren nach Anspruch 6,
**dadurch gekennzeichnet,**
daß es zur Überwachung der Füllhöhe und der Blasenbildung des Kühlwassers bei Reaktordruckbehältern von Siedewasserreaktoren verwendet wird.

**8.** Verfahren nach Anspruch 6 oder 7,
**gekennzeichnet durch** die Verwendung vertikal polarisierter freier Transversalwellen als Ultraschallsendestrahl nach Anspruch 1.

## Claims

**1.** Process for electromagnetic ultrasonic conversion, in which dynamic-mechanical forces are exerted on the material particles of an electrically conductive material of a test sample by superimposing the quasistatic magnetic field ($B_0$) and the electro-magnetic high frequency field (B) of a transmission converter and thus ultrasonic vibrations are produced -
transmission process - or conversely electrical fields are induced by ultrasonic waves arriving in the test sample and the vibrations of the material particles thus caused, these fields inductively affecting the electromagnetic high frequency field (B) and the quasistatic magnetic field ($B_0$) of a receiver converter - receiving process -,
whereby the excitation of the ultrasonic vibrations is effected in the transmission process and the induction of electrical fields by Lorentz forces ($F_L$) in the receiving process and - if the test sample is made of ferromagnetic material - additionally by magnetic forces ($F_M$) and by magnetostriction ($F_{MS}$ forces), characterised in that in order to monitor the filling level and the bubble formation in enclosures in the form of containers and tubular pipes containing or conveying liquid, at least one transmission converter (SE1, SE2, S) is coupled to the wall (1) of the enclosure, and in this wall ultrasonic vibrations are produced which, irrespective of whether there is
- liquid (3) - or
- liquid (3) containing steam/gas bubbles (4) - or
- only a fluid in the form of vapour or gas
in the interior (3.0) of the enclosure surrounded by the wall, induce ultrasonic echo signals, differing as regards amplitude and/or phase, as echo signals of the first, second or third type in at least one receiver converter (SE1, SE2, E, $E_1$, $E_2$, $E_{21}$, $E_3$) coupled to the wall (1), which echo signals are either reflected by the inner boundary surface (1.1) of the wall (1) - echo signals of the second type - or however - after entering the liquid (3) and travelling a distance therein - strike a reflector (2) from which they are reflected back through the fluid (3) and the wall (1) to the receiver converter (SE1, SE2, E, $E_1$, $E_2$, $E_{21}$, $E_3$) - echo signals of the first or third type -, and in that vertically polarised free transversal waves, so-called SV waves, are irradiated by the transmitter converter (S) at an angle ($\alpha$) to the perpendicular (1o), so that this obliquely transmitted beam ($S_{1w}$) is refracted, at the boundary surface

9

(1.1) of the container wall and the water route, towards the perpendicular and is converted into a longitudinal wave which is converted back into an SV-wave after being reflected at the built-in component (2) when travelling once again through the boundary layer (1.1) of the water route and the container wall and is refracted away from the perpendicular, and is received as an echo signal of the first or third type ($E_{1W}$ or $E_{2W}$) by a receiver converter (E), and differs with regard to amplitude and phase from the echo signal of the second type ($E_{1S}$), which is totally reflected at the inner boundary surface (1.1) of the container wall (1) in the absence of water, and from there reaches its receiver converter (E) unrefracted.

2. Process according to claim 1, preferably for detecting the filling level and the bubbles in the presence of higher bubble volume contents,
characterised in that
a transmitted signal ($E_{1S}$, $E_{2S}$,...) totally reflected singly and multiply at the inner and outer boundary surface (1.1, 1.2) of the container wall (1), i.e. a total reflection signal, is used after the first jump, the second jump, the third jump etc. as an echo signal of the second type, corresponding to the "no water present" state, in that additionally to the echo signals of the first type, corresponding to the "water present" state, which include transmitted signals ($E_{1W}$) reflected at least once at the built-in component and hence passing through the water route twice,
further echo signals of the fourth type are used which originate from transmitted signals which are reflected singly and multiply at the inner and outer container wall, i.e. represent reflection signals after the first jump, the second jump, the third jump etc., but which lose more energy with each jump than the totally reflected echo signals of the second type because of the thus ensuing energy emission into the adjoining water route,
and in that these echo signals of the fourth type ($E'_{1S}$, $E'_{2S}$), also occurring when an echo signal of the third type disappears in the presence of gas/vapour bubbles, are set into relation with each other and/or with the echo signals of the second type so that the amplitude differences between the echo signals of the second and fourth type - in the absence of the echo signals of the first and third type - are an indicator of the presence of vapour/gas bubbles in the water route.

3. Process according to claim 2, characterised in that amplitude differences ($U_1 = E_{1S} - E_{2S}$) are respectively formed between the echo signals of the second type after the first jump and those after the third jump, and amplitude differences ($U_2 = E_{1S'} - E_{2S'}$) are formed between the echo signals of the fourth type after the first jump and those after the third jump
and in that a level threshold is defined with amplitude differences ($E_{1S} - E_{2S}$) above this threshold as an indicator of the "no water present" state and with amplitude differences ($E_{1S'} - E_{2S'}$) below this threshold as an indicator of the "water present" or "water containing bubbles present" state.

4. Process according to claim 2 or 3, characterised in that a plurality of individual amplitude values are averaged to evaluate small amplitude differences and in this way the maximum fluctuation widths ($\Delta_1$, $\Delta_2$) of the mean values of the received amplitudes ($U_1$) for the "no water present" state and ($U_2$) for the "water present" state at a given signal-to-noise ratio (S/N) are reduced to minimum values so that the amplitude difference ($U_1 - U_2$) to be evaluated is a multiple of the maximum fluctuation widths ($\Delta_1$, $\Delta_2$) of the mean received amplitudes ($U_1$, $U_2$).

5. Process according to one of claims 2 to 4, characterised in that particularly in the case of long water routes the echo signals of the first type ($E_{1W}$) and the echo signals of the second type after the first jump ($E_{1S}$) are each received by a receiver converter ($E_1$) or ($E_{21}$) and in that a further receiver converter ($E_3$) is provided for receiving the echo signals of the second type after the third jump ($E_{2S}$).

6. Process for electromagnetic ultrasonic conversion according to the preamble of claim 1,
characterised in that,
to monitor the filling level and the bubble formation of the coolant water in reactor pressure vessels of nuclear power plants at least one transmission converter (SE1, SE2, S) is coupled from the outside to the container wall of the cylindrical reactor pressure vessel at least at a point a little below the normal filling level
and in that the ultrasonic transmitted beam ($S_W$, $S_{1W}$), travelling through the container wall (1) and an adjacent water route (3) of the reactor water and striking a built-in component (2) arranged on the inside of the water route as a reflector, travels back as an echo signal of the first type ($E_{1W}$) to the outside (1.2) of the container wall (1) and is received there by a receiver converter (SE1, SE2, E) as a "water present" signal, against which, in the absence of water, the transmitted beam (S1) is reflected on the inside (1.1) of the container wall (1) and is received there as an echo signal of the second type ($E_{1S}$) at the above-mentioned receiver converter or an additional receiver converter as a "water not present" signal, which latter signal differs from the echo signal of the first type by a shorter travel time and greater amplitude,

and in that when vapour- or gas bubbles (4) are present in the monitored water route (3) up to a threshold of the bubble volume content the "water present" echo signal of the first type is converted into a "water containing bubbles present" echo signal of the third type ($E_{2W}$) which is scattered into a plurality of partial echo signals and is reduced in amplitude.

7. Process according to claim 6, characterised in that it is used for monitoring the filling level and the bubble formation of the coolant water in reactor pressure vessels of boiling water reactors.

8. Process according to claim 6 or 7, characterised by the use of vertically polarised free transversal waves as the ultrasonic transmitted beam according to claim 1.

**Revendications**

1. Procédé de conversion électromagnétique des ultrasons, selon lequel dans le matériau électriquement conducteur d'une éprouvette, des forces dynamico-mécaniques sont appliquées aux particules du matériau au moyen de la superposition du champ magnétique quasi-statique ($B_0$) et du champ électromagnétique à haute fréquence (B) d'un transducteur d'émission, et des vibrations ultrasonores sont ainsi produites - opération d'émission - ou inversement des champs électriques sont induits par des ondes ultrasonores pénétrant dans l'éprouvette et par les vibrations, ainsi provoquées, des particules du matériau, champs qui influent de façon inductive sur le champ électromagnétique à haute fréquence (B) et sur le champ magnétique quasi-statique ($B_0$) d'un convertisseur de réception - opération de réception -,

et selon lequel, lors de l'opération d'émission, l'excitation des vibrations ultrasonores et, lors de l'opération de réception, l'induction de champs électriques sont produites par des forces de Lorentz ($F_L$) et en outre -dans le cas où l'éprouvette est formée d'un matériau ferromagnétique- par des forces magnétiques ($F_M$) et par magnétostriction (forces $F_{MS}$),

caractérisé par le fait que pour le contrôle du niveau de remplissage et de la formation de bulles dans des enceintes contenant ou guidant un liquide sous la forme de récipients et de canalisations, au moins un transducteur d'émission (SE1, SE2, S) est accouplé à la paroi (1) de l'enceinte et, dans cette paroi sont produites des vibrations ultrasonores, qui, en fonction du fait

- qu'un liquide (3) - ou
- un liquide (3) traversé par des bulles de vapeur/gaz (4) - ou
- uniquement un fluide à l'état de vapeur ou de gaz -

est situé dans l'espace intérieur (3.0) entouré par la paroi, de l'enceinte, induisent, en tant que signaux d'échos d'un premier, d'un second ou d'un troisième type, dans au moins un transducteur de réception (SE1, SE2, E, $E_1$, $E_2$, $E_{21}$, $E_3$) accouplé à la paroi (1), des signaux d'échos ultrasonores, qui diffèrent du point de vue de l'amplitude et/ou de la phase et sont réfléchis soit par la surface limite intérieure (1.1) de la paroi (1) -signaux d'échos du second type- soit - après passage dans le liquide (3) et parcours d'un trajet dans ce dernier- rencontrent un récepteur (2), qui les renvoie à travers le liquide (3) et la paroi (1) vers le transducteur de réception (SE1, SE2, E, $E_1$, $E_2$, $E_{21}$, $E_3$) -signaux d'échos du premier type ou du troisième type-, et

que le transducteur d'émission (S) introduit des ondes transversales libres polarisées verticalement, ce qu'on appelle des ondes SV, sous un angle ($\alpha$) par rapport à la normale d'incidence (1o) de sorte que ce rayon oblique émis ($S_{1W}$) est réfracté au niveau de l'interface (1.1) paroi du récipientsection d'eau, en direction de la normale et est converti en une onde longitudinale qui, après réflexion sur le composant incorporé (2) et lors d'un nouveau franchissement de l'interface (1.1) section d'eau-paroi du récipient, est converti en retour en une onde SV et est réfracté de manière à s'écarter de la normale et est reçu, en tant que signal d'écho du premier ou du troisième type ($E_{1W}$ ou $E_{2W}$) par un transducteur de réception (E) et diffère, du point de vue de l'amplitude et de la phase, du signal d'écho du second type ($E_{1S}$), qui, en cas d'absence d'eau au niveau de l'interface intérieure (1.1) de la paroi du récipient (1), subit une réflexion totale et, à partir de là, atteint sans être réfracté, son transducteur de réception (E).

**2.** Procédé suivant la revendication 1 de préférence pour la détection du niveau de remplissage et celle des bulles dans proportion assez importantes de volume de bulles,
caractérisé par le fait
qu'en tant que signal d'écho d'un second type, qui correspond à l'état "absence d'eau", on utilise un signal d'émission ($E_{1S}$, $E_{2S}$, ...), qui subit une réflexion totale unique et plusieurs réflexions totales au niveau de l'interface intérieure et de l'interface extérieure (1.1, 1.2) de la paroi (1) du récipient, c'est-à-dire un signal de réflexion totale après le premier renvoi, le second renvoi, le troisième renvoi, etc.,
qu'en plus des signaux d'échos du premier type, qui correspondent à l'état "présence d'eau", qui incluent des signaux d'émission ($E_{1W}$) réfléchis au moins une fois sur le composant incorporé et par conséquent traversant deux fois la section d'eau,
on utilise d'autres signaux d'échos d'un quatrième type, qui proviennent de signaux émis, qui sont réfléchis une fois ou plusieurs fois sur la paroi intérieure et sur la paroi extérieure du récipient, c'est-à-dire qui représentent des signaux réfléchis après le premier renvoi, le second renvoi, le troisième renvoi, etc., mais qui, lors du premier renvoi, en raison de l'émission d'énergie qui pénètre dans la section contiguë d'eau, perdent plus d'énergie que les signaux d'échos du second type, ayant subi une réflexion totale, et que ces signaux d'échos du quatrième type ($E'_{1S}$, $E'_{2S}$), qui apparaissent également lorsqu'un signal d'écho du troisième type disparaît lors de la présence de bulles de gaz/vapeur, sont mis en relation réciproque et/ou avec les signaux d'échos du second type de sorte que les différentes amplitudes entre les signaux d'échos du second type et du quatrième type -dans le cas de l'absence des signaux d'échos du premier et du troisième type- sont une indication de la présence de bulles de vapeur/gaz dans la section d'eau.

**3.** Procédé suivant la revendication 2, caractérisé par le fait
que respectivement des différences d'amplitudes ($U_1$ = $E_{1S}$ -$E_{2S}$) sont formées entre les signaux d'échos du second type après le premier renvoi et les signaux d'échos du second type après le troisième renvoi, et des différences d'amplitudes ($U_2$ = $E_{1S'}$ - $E_{2S'}$) sont formées entre les signaux d'échos du quatrième type après le premier renvoi et les signaux d'échos du quatrième type après le troisième renvoi, et
qu'un seuil de niveau est défini, des différences d'amplitudes ($E_{1S}$ - $E_{2S}$) dépassant ce seuil servant d'indications de l'état "absence d'eau", tandis que des différences d'amplitudes ($E_{1S'}$ - $E_{2S'}$) inférieures à ce seuil étant l'indication de l'état "présence d'eau" ou "présence d'eau contenant des bulles".

**4.** Procédé suivant la revendication 2 ou 3, caractérisé par le fait
que pour les variations de petites différences d'amplitudes, on forme la moyenne d'une multiplicité de valeurs d'amplitudes individuelles et, de cette manière, les amplitudes maximales de variation ($\Delta_1$, $\Delta_2$) des valeurs moyennes des amplitudes de réception ($U_1$) pour l'état "absence d'eau" et ($U_2$) pour l'état "présence d'eau" pour un rapport signal/bruit (S/N) donné, sont réduites à des valeurs minimales de sorte que la différence d'amplitudes ($U_1$ - $U_2$) devant être évaluée est égale à un multiple des largeurs maximales de la variation ($\Delta_1$, $\Delta_2$) des amplitudes moyennes de réception ($U_1$, $U_2$).

**5.** Procédé suivant l'une des revendications 2 à 4, caractérisé par le fait
que notamment dans le cas de grandes sections d'eau, les signaux d'échos du premier type ($E_{1W}$) et les signaux d'échos du second type après le premier renvoi ($E_{1S}$) sont reçus respectivement par un transducteur de réception ($E_1$ ou $E_{21}$) et que pour la réception des signaux d'échos du second type après le troisième renvoi ($E_{2S}$), il est prévu un autre transducteur de réception ($E_3$).

**6.** Procédé de conversion électromagnétique des ultrasons selon le préambule de la revendication 1,
caractérisé par le fait
que le contrôle du niveau de remplissage et de la formation de bulles concernant l'eau de refroidissement dans des caissons sous pression de réacteurs de centrales nucléaires, au moins un transducteur d'émission (SE1, SE2, S) est accouplé de l'extérieur à la paroi du caisson cylindrique sous pression du réacteur, au moins en un emplacement situé légèrement au-dessous du niveau normal de remplissage, et
que le faisceau d'émission ultrasonore ($S_W$, $S_{1W}$), qui traverse la paroi (1) du caisson et une section d'eau contigue (3) d'eau du réacteur et rencontre un composant incorporé (2) disposé en tant que réflecteur sur le côté intérieur de la section d'eau, est réfléchi en tant que signal d'écho du premier

type ($E_{1W}$) en direction de la face extérieure (1,2) de la paroi (1) du caisson et est reçu, à partir de là, par un transducteur de réception (SE1, SE2, E) en tant que signal "présence d'eau", tandis que dans le cas d'absence d'eau, le faisceau d'émission (S1) est réfléchi par la face intérieure (1.1) de la paroi (1) du caisson et y est reçue, en tant que signal d'écho du second type ($E_{1S}$), au niveau dudit transducteur de réception ou d'un transducteur de réception supplémentaire en tant que signal "absence d'eau", ce dernier signal différant du signal d'écho du premier type par un temps de propagation plus court et une amplitude plus importante, et

que dans le cas de la présence de bulles de vapeur ou d'eau (4) dans la section d'eau contrôlée (3) jusqu'à une limite de la proportion du volume de bulles, le signal d'écho du premier type "présence d'eau" est converti en un signal d'écho du troisième type ($E_{2W}$) "présence d'eau contenant des bulles", qui est dispersée en plusieurs signaux d'échos partiels et dont l'amplitude est réduite.

7. Procédé suivant la revendication 6, caractérisé par le fait qu'on l'utilise pour contrôler le niveau de remplissage et la formation des bulles concernant l'eau de refroidissement dans des caissons sous pression de réacteurs à eau bouillante.

8. Procédé suivant la revendication 6 ou 7, caractérisé par l'utilisation d'ondes transversales libres polarisées verticalement en tant que faisceau d'émission ultrasonore suivant la revendication 1.

FIG 1

FIG 2

FIG 3

FIG 4

FIG 5

FIG 6

FIG 7

$\Delta_1 : \Delta_2$ (dB)

S/N = 25 dB

$U_1$   "kein Wasser"

$U_2$   "Wasser"

FIG 8

$\Delta_1$ : maximale Schwankungsbreite von $U_1$
$\Delta_2$ : maximale Schwankungsbreite von $U_2$

FIG 9